# EUROPÄISCHE PATENTANMELDUNG

(11) **EP 1 044 861 A1**
(43) Veröffentlichungstag der Anmeldung: **18.10.2000**
(21) Anmeldenummer: 00106492.2
(22) Anmeldetag: 25.03.2000
(51) Int. Cl.: B62B 3/02, B62B 5/00

(54) **Handwagen als zusammenlegbarer Golfwagen**

(30) Priorität: 16.04.1999 DE 19917254
(71) Anmelder: Sellmeier, Benno F., 51375 Leverkusen (DE)
(72) Erfinder: Sellmeier, Benno F., 51375 Leverkusen (DE)
(74) Vertreter: Patentanwälte Lippert, Stachow, Schmidt & Partner

(57) **Zusammenfassung**

Die Erfindung betrifft einen Handwagen als zusammenlegbarer, motorangetriebener Golfwagen (1) zum Transport wenigstens einer ein Golfbesteck aufnehmenden Golftasche (7) mit einem mit Rädern versehenen Fahrgestell (4) mit einer elektrisch betriebenen Antriebseinheit, die über ein Getriebe (11) wenigstens zwei Räder (3) antreibt, mit wenigstens einer Halterung (6) für wenigstens eine Golftasche (7) und mit einer Deichsel. Das Fahrgestell (4) des Golfwagens (1) ist als Gestängerahmen (8) ausgebildet und das Getriebe bildet ein tragendes Element des Gestängerahmens (8).

## Beschreibung

Die Erfindung betrifft einen Handwagen als zusammenlegbarer, motorangetriebener Golfwagen.

Derartige motorbetriebenen Golfwagen erfreuen sich zunehmender Beliebtheit. Die bekannten selbstfahrenden Golfwagen werden über einen batteriebetriebenen Elektromotor angetrieben, wobei der Motor, ein Getriebe und eine Batterie fest auf einem Fahrgestell angeordnet sind, das in der Regel aus Gründen der Raum- und Gewichtsersparnis zwei oder drei Räder aufweist. Die Lenkbarkeit und Fahrstabilität sowie das Handling solcher Golfwagen lassen zu wünschen übrig.

Größere Golfwagen mit vier Rädern, von denen beispielsweise zwei Räder angetrieben sind, benötigen ein verhältnismäßig großes Fahrgestell zur Aufnahme von Motor, Getriebe und Energieversorgung und lassen sich nicht platzsparend zusammenlegen.

Bei drei- oder vierrädrigen Golfwagen ist darüber hinaus eine leichte Lenkbarkeit nur mit aufwendigen Mitteln zu realisieren. Bei den bekannten Golfwagen mit zwei angetriebenen Rädern, die starr miteinander verbunden sind, wird eine verhältnismäßig leichtgängige Lenkung dadurch erzielt, daß die Radnaben als Freilaufnaben ausgebildet sind, die teuer und anfällig sind.

Der Erfindung liegt daher die Aufgabe zugrunde, einen Handwagen als zusammenlegbaren motorangetriebenen Golfwagen zu schaffen, der eine besonders einfache Konstruktion aufweist und leicht und besonders raumsparend zusammenlegbar ist.

Der Erfindung liegt weiterhin die Aufgabe zugrunde, einen solchen Handwagen zu schaffen, der bei einfacher Konstruktion und bei platzsparender Zusammenlegbarkeit leicht lenkbar und handhabbar ist.

Eine der Erfindung zugrundeliegende Aufgabe wird zunächst gelöst durch einen Handwagen als zusammenlegbarer, motorangetriebener Golfwagen zum Transport wenigstens einer ein Golfbesteck aufnehmenden Golftasche mit einem mit Rädern versehenen Fahrgestell, mit einer elektrisch betriebenen Antriebseinheit, die über ein Getriebe wenigstens zwei Räder antreibt, mit wenigstens einer Halterung für wenigstens eine Golftasche und mit einer Deichsel, wobei das Fahrgestell als Gestängerahmen ausgebildet ist und das Getriebe ein tragendes Element des Gestängerahmens bildet.

Insbesondere durch die Maßnahme, daß das Getriebe ein tragendes Element des Fahrgestells bildet, ist es möglich, das Fahrgestell besonders leicht, klein und platzsparend auszubilden. Hierdurch kann auf gesonderte Aufnahmen oder Halterungen für den Motor und das Getriebe verzichtet werden.

Bei einer besonders bevorzugten Ausführungsform des erfindungsgemäßen Handwagens wird das Getriebe von zwei Halteelementen eingefaßt und aufgenommen, die mit einen Querträger des Gestängerahmens bildenden Hohlachsen starr verbunden sind. Diese Hohlachsen ermöglichen den Durchtritt für Antriebswellen zu den angetriebenen Rädern und bilden gleichzeitig einen Teil des Gestängerahmens, der wiederum starr mit anderen Teilen des Fahrgestells verbunden sein kann.

Zweckmäßigerweise bildet die Deichsel eine Gabel aus, die beiderseits des Getriebes starr mit den Hohlachsen verbunden ist und die mit der Antriebseinheit und dem Getriebe bezüglich des Gestängerahmens verschwenkbar ist. Dabei sind die Antriebseinheit und das Getriebe vorteilhafterweise so angeordnet, daß diese sich beim Einschwenken der Deichsel in den Gestängerahmen einfügen, so daß der Handwagen gemäß der Erfindung besonders platzsparend zusammenlegbar ist.

Zweckmäßigerweise werden die in Fahrtrichtung hinteren Räder über durch die Hohlachsen geführte Wellen angetrieben.

Die Halteelemente können beispielsweise jeweils als Trägerplatten mit Befestigungsflanschen für das Getriebe ausgebildet sein.

Nach einer besonders bevorzugten Ausführungsform des erfindungsgemäßen Handwagens ist vorgesehen, daß das Getriebe als Differentialgetriebe ausgebildet ist. Hierdurch ist eine besonders leichte Lenkbarkeit des Golfwagens gewährleistet. Lenkbarkeit und Fahrstabilität können zusätzlich noch dadurch verbessert werden, daß beispielsweise die Vorderräder im Vergleich zu den Hinterrädern einen kleinen Durchmesser aufweisen.

Vorzugsweise ist als Antriebseinheit ein Getriebemotor vorgesehen. Dieser kann beispielsweise geschwindigkeitsregelbar sein.

Die Deichsel kann mehrteilig und zusammenlegbar ausgebildet sein, wobei vorzugsweise ein den Handgriff zur Führung des Golfwagens bildender Teil der Deichsel in verschiedenen Winkelstellungen zu dem die Gabel bildenden Teil der Deichsel festlegbar ist.

Zweckmäßigerweise ist die Halterung für die Golftasche bzw. den Golfsack an der Deichsel vorgesehen. Diese Halterung kann beispielsweise als kreisbogenförmiger Bügel ausgebildet sein, auf dem die Golftasche aufliegt. Dabei kann sich die Golftasche gegen einen vorderen Querträger des Gestängerahmens abstützen, wodurch insgesamt bei beladenem Golfwagen eine erhöhte Stabilität erzielt wird. Der Gestängerahmen kann durch ein einstückig und U-förmig gebogenes Stahlrohr gebildet sein, das schwenkbeweglich an den das Getriebe haltenden Hohlachsen befestigt ist.

Zusätzlich kann ein auf den Gestängerahmen aufsteckbarer Sitz vorgesehen sein.

Eine der Erfindung zugrundeliegende Aufgabe wird weiterhin gelöst durch einen Handwagen als Golfwagen zum Transport wenigstens einer ein Golfbesteck aufnehmenden Golftasche mit einem mit Rädern versehenen Fahrgestell, mit einer elektrisch betriebenen Antriebseinheit, die über ein Getriebe wenigstens zwei Räder antreibt, mit wenigstens einer Halterung für wenigstens eine Golftasche oder einen Golfsack und mit wenigstens einer Deichsel, der sich dadurch auszeichnet, daß als Getriebe ein die in Fahrtrichtung hinteren Räder treibendes Differentialgetriebe vorgesehen ist.

Hierdurch läßt sich eine besonders leichte Handhabung und Lenkbarkeit des Golfwagens erzielen.

Die Erfindung wird nachstehend anhand eines in den Zeichnungsfiguren dargestellten Ausführungsbeispiels erläutert.

Es zeigen:
- Fig. 1: eine schematische Seitenansicht des Golfwagens gemäß der Erfindung,
- Fig. 2: eine schematische Hinteransicht des in Fig. 1 gezeigten Golfwagens und
- Fig. 3: eine schematische Detailansicht aus Fig. 2, aus welcher die Wirkungsweise der Kraftübertragung auf die Hinterräder ersichtlich ist.

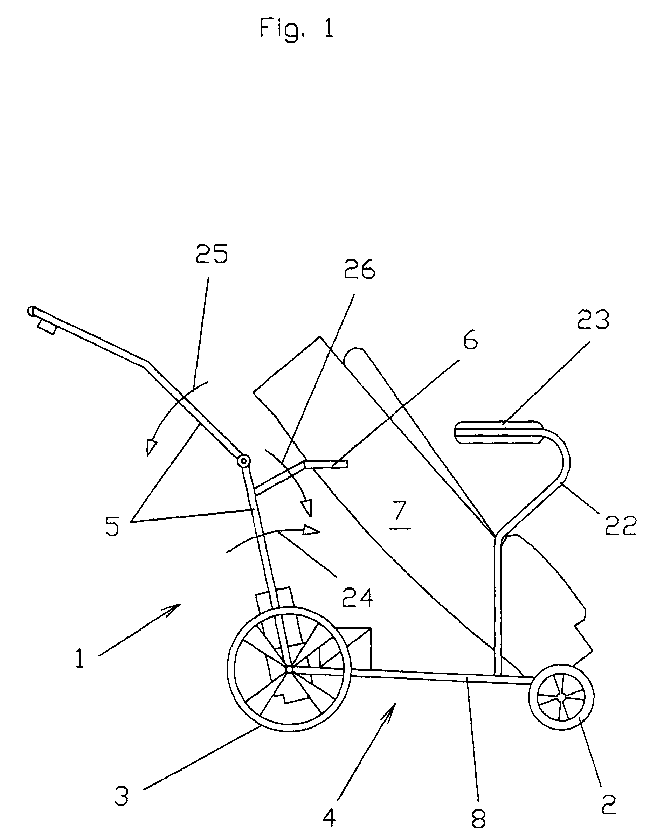

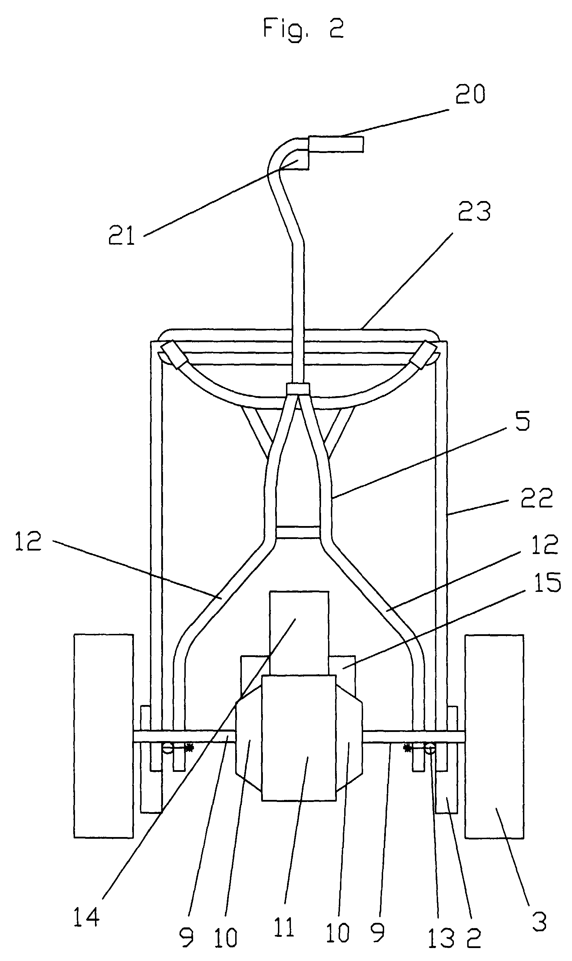

Wie insbesondere aus den Figuren 1 und 2 ersichtlich ist, besteht der Golfwagen 1 gemäß der Erfindung im wesentlichen aus einem vier Räder 2, 3 aufweisenden Fahrgestell 4 und einer zweiteiligen Deichsel 5, an der ein Haltebügel 6 als Auflager für eine Golftasche 7 schwenkbar angeordnet ist. Es ist für den Fachmann ersichtlich, daß der Golfwagen auch dreiräderig ausgebildet sein kann.

Mit 2 sind die Vorderräder bezeichnet, mit 3 die Hinterräder, die aus Gründen der Lenkbarkeit und Fahrstabilität einen größeren Durchmesser als die Vorderräder 2 aufweisen.

Das Fahrgestell 4 ist als Gestängerahmen 8 ausgebildet, der aus einem U-förmig gebogenen Stahlrohrabschnitt als vorderer Rahmenbügel 13 und zwei einen hinteren Querträger bildenden Hohlachsen 9 besteht. Die Hohlachsen 9 sind starr mit als Haltebleche ausgebildeten Halteelementen 10 verbunden, vorzugsweise verschweißt, welche beiderseits an das mit 11 bezeichnete Getriebe angeflanscht sind. Die Hohlachsen 9 wiederum sind starr mit zwei Schenkeln 12 eines gabelförmig ausgebildeten Teils der Deichsel 5 verbunden.

Der vordere Rahmenbügel 13 ist schwenkbeweglich auf den Hohlachsen 9 gelagert, so daß der die Gabel bildende Teil der Deichsel 5 im Bezug auf den Rahmenbügel 13 oder umgekehrt verschwenkbar ist. Aufgrund der starren Verbindung der Schenkel 12 der Deichsel 5 mit den Hohlachsen 9 sowie wegen der festen Einspannung des Getriebes 11 zwischen den Hohlachsen 9 müssen diese und das Getriebe 11 eine Schwenkbewegung bezüglich des Rahmenbügels 13 mitvollziehen.

Angetrieben wir der Golfwagen 1 über einen Elektromotor 14, der als Getriebemotor ausgebildet ist und folglich mit dem Getriebe 11 eine Baueinheit bildet.

Der Elektromotor 14 wird über eine von dem Fahrgestell 4 getragene Batterie 15 gespeist, wobei die Batterie 15 auf einer von dem Rahmenbügel 13 getragenen, nicht dargestellten Aufnahme aufsteht.

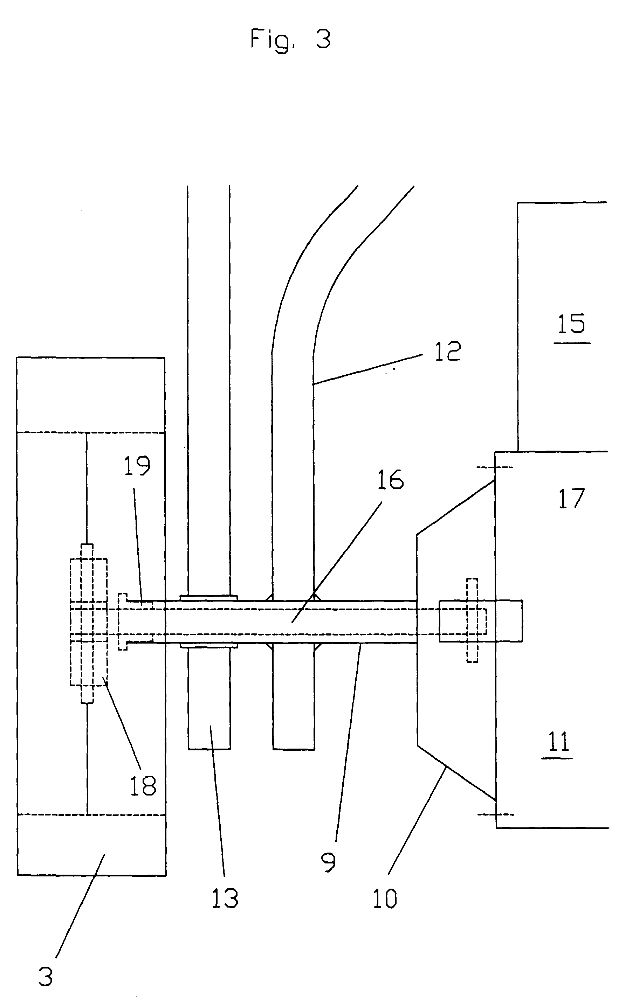

Wie dies aus Fig. 3 ersichtlich ist, werden die Hinterräder 3 über Antriebswellen 16 angetrieben, die die Hohlachsen 9 durchsetzen. Die Antriebswellen 16 sind jeweils in hohle Abtriebswellen 17 des Getriebes 11 eingesteckt und dort drehfest gesichert, beispielsweise mit Stiften, Bolzen oder dergleichen. Die Antriebswellen 16 sind jeweils mit ihren freien, aus den Hohlachsen 9 herausragenden Enden drehfest mit den Naben 18 der Hinterräder verbunden. Die Antriebswellen 16 sind jeweils an dem von den Halteelementen 10 abliegenden Enden der Hohlachsen 9 in dort eingesetzten Kunststoff-Gleitbuchsen 19 gelagert. Die drehfeste Verbindung der Naben 18 der Hinterräder 3 mit den Antriebswellen 16 kann beispielsweise durch die Naben 3 und die Antriebswellen 16 durchsetzende Feder-Splinte oder sogenannte β-Splinte bewerkstelligt werden.

Das Getriebe 11 ist wie vorstehend beschrieben als Differentialgetriebe ausgebildet, welches ermöglicht, daß der Golfwagen 1 mit kleinstmöglichem Kurvenradius fast auf der Stelle gedreht werden kann.

Die Deichsel 5 ist zweiteilig ausgebildet, wobei ein einen Handgriff 20 bildendes oberes Element der Deichsel schwenkbeweglich an dem gabelförmig ausgebildeten Teil der Deichsel 5 angeordnet ist und mittels eines Feststellmechanismus in verschiedenen Winkelstellungen festlegbar ist.

Der Elektromotor 14 wird über einen Bereich des Handgriffs vorgesehenes Bedienelement 21 angesteuert und ist mittels dieses Bedienelements 21 in seiner Geschwindigkeit regelbar.

Mit 22 ist ein aus Stahlrohrrahmen gefertigtes Sitzelement mit einem Sitzkissen 23 bezeichnet, das in Steckaufnahmen an dem Rahmenbügel 13 lösbar einsetzbar ist.

Um den Golfwagen 1 transportgerecht zusammenzulegen wird wie folgt verfahren:

Zunächst werden das Sitzelement 22 sowie die Golftasche 7 entfernt.

Die Golftasche 7, die sich gegen einen Teil des Rahmenbügels 13 abstützt, stabilisiert übrigens den Golfwagen 1 insgesamt dadurch, daß sie einer Bewegung der Deichsel und des Gestängerahmens 8 zueinander entgegenwirkt. Weiterhin wird zum Zusammenlegen des Golfwagens 1 die Batterie 15 abgeklemmt und entfernt. Der Haltebügel 6 wird gelöst und in Richtung des Pfeils 26 auf die Gabel 5 so verschwenkt, daß er darauf aufliegt. Sodann werden die Deichsel 5 sowie der Elektromotor 14 mit dem daran angeordneten Getriebe 11 in Richtung des Pfeils 24 bezüglich des Rahmenbügels 13 verschwenkt, bis diese auf dem Gestängerahmen 8 bzw. auf dem Rahmenbügel 13 aufliegt. Anschließend oder gleichzeitig wird die Klemmung zwischen dem den Handgriff 20 bildenden Teil der Deichsel 5 und dem gabelförmig ausgebildeten Bereich der Deichsel 5 gelöst und erstgenanntes Teil wird in Richtung des Pfeils 25 eingeschwenkt, so daß der Golfwagen 1 nun vollständig zusammengelegt ist. Gegebenenfalls kann der Haltebügel 6 gelöst und in Richtung des Pfeils 26 verschwenkt werden.

Durch Herausziehen der Sicherungsstifte oder β-Splinte der großen Antriebsräder 3 können diese ebenfalls leicht von den Antriebsachsen gelöst werden, so daß der Golfwagen 1 ggfs. für Transporte in Kofferräumen nochmals verkleinert werden kann.

Der Rahmen bzw. die Rahmenkonstruktion kann alternativ aus verchromtem Stahl oder einem Verbundwerkstoff gefertigt sein, der vorzugsweise einen Mehrkompomentenwerkstoff aus Carbon/Kevlar® oder ähnlichen geeigneten Materialien aufweist. Daneben kann der Rahmen aus Titan oder einer beliebigen Kombination der Werkstoffe gefertigt werden.

Die aus dem Stand der Technik bekannten Grundflächen der Fahrgestelle weisen eine im wesentlichen dreieckige Gestalt auf, wobei die Räder an den Ecken des dreieckigen Fahrgestells angeordnet sind. Die erfindungsgemäß im wesentlichen rechteckige Grundfläche ermöglicht es dagegen, vier Räder an den externen Eckpunkten anzuordnen. Dieses erhöht die seitliche Kippsicherheit gegenüber der dreieckigen Ausführung deutlich. Zudem kann die Gesamtspurbreite so schmal gehalten werden, daß der Wagen problemlos in engen Räumen manövrierbar ist und selbst in Caddy-Boxen Platz findet, ohne diesen demontieren zu müssen.

Unter dem Sitzkissen kann in einer Weiterentwicklung eine abnehmbare Kühlbox angeordnet sein.

### Bezugszeichenliste

- 1: Golfwagen
- 2: Vorderräder
- 3: Hinterräder
- 4: Fahrgestell
- 5: Deichsel
- 6: Haltebügel
- 7: Golftasche
- 8: Gestängerahmen
- 9: Hohlachsen
- 10: Halteelemente
- 11: Getriebe
- 12: Schenkel
- 13: Rahmenbügel
- 14: Elektromotor
- 15: Batterie
- 16: Antriebswellen
- 17: Abtriebswellen
- 18: Naben
- 19: Kunststoff-Gleitbuchsen
- 20: Handgriff
- 21: Bedienelement
- 22: Sitzelement
- 23: Sitzkissen
- 24, 25, 26: Pfeile

## Patentansprüche

1. Handwagen als zusammenlegbarer, motorangetriebener Golfwagen (1) zum Transport wenigstens einer ein Golfbesteck aufnehmenden Golftasche (7) mit einem als Gestängerahmen ausgebildeten, mit wenigstens drei Rädern versehenen, sich im Betrieb etwa horizontal erstreckenden Fahrgestell (4), mit einer elektrisch betriebenen Antriebseinheit, die über ein Getriebe (11) wenigstens zwei Räder (3) antreibt, mit wenigstens einer Halterung für wenigstens eine Golftasche (7) und mit einer Deichsel (5), wobei das Fahrgestell (4) als Gestängerahmen (8) ausgebildet ist und das Getriebe (11) ein tragendes Element des Gestängerahmens (8) bildet.

2. Handwagen nach Anspruch 1, **dadurch gekennzeichnet**, daß das Getriebe (11) von zwei Halteelementen (10) eingefaßt wird, die mit einen Querträger des Gestängerahmens (8) bildenden Hohlachsen (9) starr verbunden sind.

3. Handwagen nach Anspruch 1 oder 2, **dadurch gekennzeichnet**, daß die Deichsel (5) eine Gabel bildet, die beiderseits des Getriebes (11) starr mit den Hohlachsen (9) verbunden ist und die mit der Antriebseinheit und dem Getriebe (11) bezüglich des Gestängerahmens (8) verschwenkbar ist.

4. Handwagen nach einem der Ansprüche 1 bis 3, **dadurch gekennzeichnet**, daß die in Fahrtrichtung hinteren Räder über durch die Hohlachsen (9) geführte Antriebswellen (16) angetrieben sind.

5. Handwagen nach einem der Ansprüche 1 bis 4, **dadurch gekennzeichnet**, daß die Halteelemente (10) als Trägerplatten mit Befestigungsflanschen für das Getriebe (11) ausgebildet sind.

6. Handwagen nach einem der Ansprüche 1 bis 5, **dadurch gekennzeichnet**, daß das Getriebe (11) als Differentialgetriebe ausgebildet ist.

7. Handwagen nach einem der Ansprüche 1 bis 6, **dadurch gekennzeichnet**, daß als Antriebseinheit ein Getriebemotor vorgesehen ist.

8. Handwagen nach einem der Ansprüche 1 bis 7, **dadurch gekennzeichnet**, daß die Deichsel (5) mehrteilig und zusammenlegbar ausgebildet ist.

9. Handwagen als Golfwagen (1) zum Transport wenigstens einer ein Golfbesteck aufnehmenden Golftasche (7) mit einem mit Rädern (2, 3) versehenen Fahrgestell (4) mit einer elektrisch betreibbaren Antriebseinheit, die über ein Getriebe (11) wenigstens zwei Räder (3) antreibt, mit wenigstens einer Halterung (6) für eine Golftasche (7) oder einen Golfsack und mit wenigstens einer Deichsel (5), **dadurch gekennzeichnet**, daß als Getriebe (11) ein die in Fahrtrichtung hinteren Räder (3) treibendes Differentialgetriebe vorgesehen ist.
